# EUROPEAN PATENT APPLICATION

(11) **EP 1 463 322 A2**
(43) Date of publication of application: **29.09.2004**
(21) Application number: 04002340.0
(22) Date of filing: 03.02.2004
(51) Int. Cl.: H04N 7/173

(54) **Renewable conditional access system**

(30) Priority: 24.03.2003 US 395681
(71) Applicant: MICROSOFT CORPORATION, Redmond, Washington 98052-6399 (US)
(72) Inventor: Barrett, Peter, T., San Francisco California 94117 (US); Wassermann, Steven, Mountain View California 94041 (US)
(74) Representative: Grünecker, Kinkeldey, Stockmair & Schwanhäusser Anwaltssozietät

(57) **Abstract**

A conditional access system employs a hybrid hardware/software architecture that is secure, yet allows easy renewability. The system has a security module implemented on a single embedded IC that performs all of the cryptographic functionality and stores all cryptographic keys used in decryption of content. Conditional access policies are established by one or more software components that execute on a processor separate from the security module. Content deemed accessible by the software components is passed to the security module, where it is decrypted using the keys maintained in the module. The decrypted content is then transferred out from the security module to a processor for further processing. With this hybrid architecture, the cryptographic keys and algorithm primitives are securely maintained within the embedded module, and not exposed to other components. Also, since the access policies are implemented in software components that need not be trusted by the security module, they can be easily updated.

## Description

### TECHNICAL FIELD

This invention relates to conditional access systems.

### BACKGROUND

In today's entertainment world, multimedia content is delivered to homes via cable networks, satellite, terrestrial, and the Internet. The content is encrypted (or otherwise scrambled) prior to distribution to prevent unauthorized access. Conditional access systems reside at subscribers to decrypt the content when it arrives. The systems implement conditional access policies that specify when and what content the viewers are permitted to view based on their subscription package or other conditions. In this manner, the conditional access systems ensure that only authorized subscribers are able to view the content. For flexibility purposes, it is desirable that such systems support renewability of the conditional access policies. This allows content providers to change access conditions for any reason, such as when the viewer modifies subscription packages.

Conditional access systems typically fall into one of three groups: (1) hardware-based systems, (2) software-based systems, and (3) smart card-based systems. In the first group, the decryption technologies and conditional policies are implemented in hardware. The hardware-centric design is reliable from a security standpoint, because it is difficult to attack. However, the hardware solution has a drawback in that the conditional access policies are not easily renewable.

Software-based solutions, such as digital rights management (DRM) designs, rely on obfuscation for protection of the decryption technologies. With software-based solutions, the policies are easy and inexpensive to renew, but such systems can be easier to compromise in comparison to hardware-based designs. The third group―smart card-based devices―rely on a secure microprocessor. Smart cards can be inexpensively replaced, but have proven easier to attack than the embedded hardware solutions.

Accordingly, there is a continuing need for an improved conditional access architecture.

### SUMMARY

A conditional access system employs a hybrid hardware/software architecture that is secure, yet allows easy renewability. The system has a security module implemented on a single integrated circuit chip that performs all of the cryptographic functionality. The security module also stores all cryptographic keys used in decryption of content. The conditional access system further implements one or more software components that establish the conditional access policies. These software components are executed outside of the security module, and need not be trusted by the security module.

The conditional access system determines which content is accessible based upon the policies implemented in the software components. Content deemed accessible is passed to the security module, where it is decrypted using the keys maintained within the module. The decrypted content is then passed out from the security module to a video processor for further processing.

With this hybrid architecture, the cryptographic keys and algorithm primitives are securely maintained within the embedded chip module, and not exposed to other components. This affords reliable security akin to pure hardware-based systems. However, since the access policies are implemented as software components that can be easily updated, the architecture facilitates easy renewability.

### BRIEF DESCRIPTION OF THE DRAWINGS

Fig. 1 illustrates a content distribution environment in which a conditional access system is implemented.
Fig. 2 is a block diagram of the conditional access system.
Fig. 3 is a flow diagram of a conditional access protocol implemented by the conditional access system of Fig. 2.

### DETAILED DESCRIPTION

The disclosed subject matter describes a conditional access system that implements a hybrid hardware/software architecture with reliable security and renewable access policies. The following discussion assumes that the reader is familiar with cryptography. For a basic introduction of cryptography, the reader is directed to a text written by Bruce Schneier and entitled "Applied Cryptography: Protocols, Algorithms, and Source Code in C," published by John Wiley & Sons with copyright 1994 (with a second edition in 1996) or the text written by Alfred J. Menezes, Paul C. van Oorschot, and Scott A. Vanstone and entitled "Handbook of Applied Cryptography," published by CRC Press with copyright 1997.

### Exemplary Environment

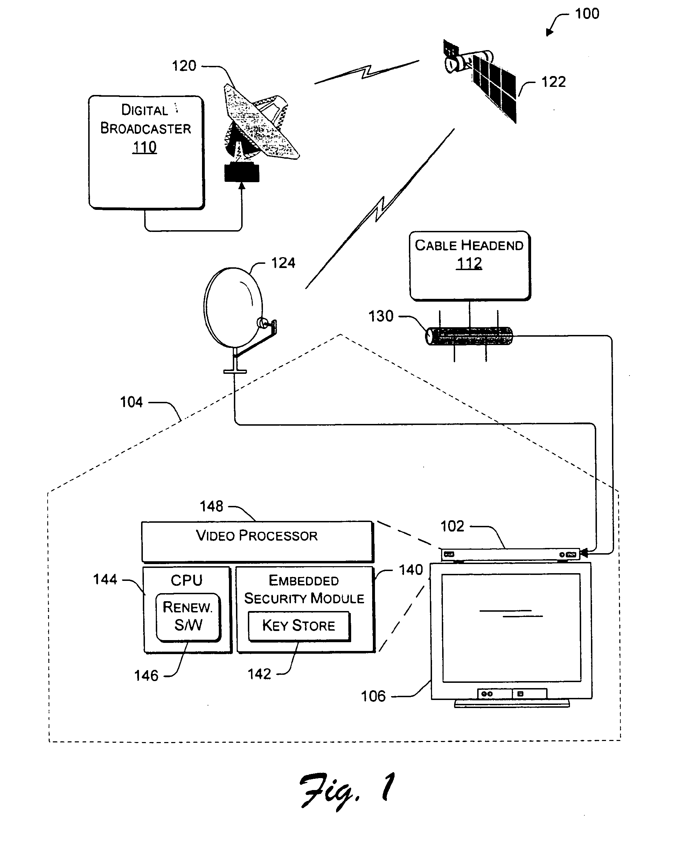

Fig. 1 shows an exemplary environment 100 in which a conditional access system 102 can be implemented. The conditional access system 102 is illustrated as residing in a viewer's home 104. The system 102 can be implemented in many forms, including as a set top box (STB) or cable receiver, a satellite receiver, a digital video recorder, or other device that offers conditional access to content. The content can be embodied in many forms, including video, audio, text, graphics, and so forth. In the illustrated implementation, the conditional access system 102 outputs accessible content to a television 106 for display to a viewer.

The conditional access system 102 is capable of receiving analog or digital video content from one or more sources including, for example, a digital satellite broadcaster 110 and a cable network operator 112. Satellite broadcaster 110 encodes the content into digital packets and transmits the packets over a satellite network having an uplink transmitter 120 and an orbiting satellite 122. A satellite receiver or dish 124 resides at the viewer's home 104 to receive the satellite broadcast.

The cable network operator 112 is configured to transmit content in digital or analog format over a cable distribution network 130 to the viewer's residence 104. The cable network 130 may be implemented primarily as a broadcast network, or it may be implemented to support interactivity. In addition to those shown, other content sources and distribution networks may be used including, for example, regional broadcasters that transmit over terrestrial wireless networks (e.g., RF, microwave, etc.) and content servers that stream content over the Internet.

The conditional access system 102 implements a hybrid architecture that combines embedded chip technologies with software technologies. The conditional access system 102 includes an embedded security module 140 composed of generic cryptographic building blocks, such as an encryption/decryption engine and a key manager. The security module 140 also includes a key store 142 to hold keys used to decrypt the content. The security module 140 is constructed using tamper resistant technologies, such as embedding the circuitry and keys in a single integrated circuit chip that is difficult to reverse engineer or otherwise cryptographically attack.

The conditional access system 102 further includes a CPU (central processing unit) 144 separate from the security module 140. One or more renewable software components 146 are shown executing on the CPU 144. The renewable software 146 includes items that benefit from being easily or readily updatable. Such items include conditional access policies, operational code for the conditional access system 102, and subscriber infrastructure that explains what content is available for subscribers, how long the content is available, and what the content costs. The software components 146 can be collectively or individually updated by downloading new software component(s) via a distribution network (e.g., satellite network, cable network, Internet) or by mailing a storage medium with the new component(s).

Some or all of the content received at the conditional access system 102 is in an encrypted state to prevent unintended or unauthorized viewing. The CPU 144 determines which content is accessible based upon the policies and infrastructure established in the software components 146. Content deemed accessible is passed to the security module 140 where it is decrypted using the keys maintained in the secure key store 142. The decrypted content is then transferred to a video processor 148 for further processing and display to the viewer.

During this conditional access process, the security module 140 performs all of the cryptographic functions on the content without exposing the keys in the key store 142 to other components such as the CPU 144 and the video processor 148. Since the keys and cryptographic functionality are embedded in silicon and do not leave the chip, it is difficult to cryptographically attack and discover the secrets of the conditional access system. One cannot successfully attack the conditional access system simply by tapping communication lines between hardware components. Also, since the software components 146 do not contain the keys or key store, they do not need to be trusted by the security module 140. Thus, the software components 146 can be updated routinely, or as needed. As a result, this architecture offers the security of embedded systems, but allows the flexibility of renewable software for policy and other infrastructure elements.

### Conditional Access System

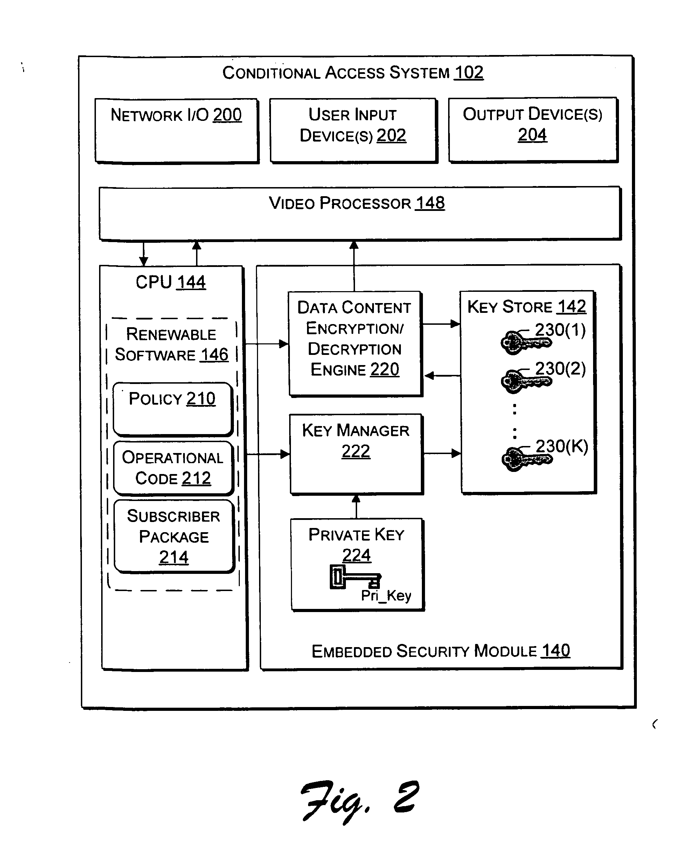

Fig. 2 shows selected components of the conditional access system 102 in more detail. The system 102 includes the embedded security module 140, the CPU 144, and the video processor 148. The conditional access system 102 further includes a network I/O 200 that enables connection to the distribution network (e.g., satellite dish 124 or cable 130) for receiving the content. One or more user input devices 202 (e.g., panel buttons, handheld remote control) are optionally provided to facilitate viewer interaction with the conditional access system. Additionally, depending upon the configuration, one or more output devices 204 (e.g., LEDs, screen, speaker, etc.) may be implemented in the conditional access system.

One or more renewable software components 146 are illustrated as executing on CPU 144. Representative components include a conditional access policy component 210, operational code 212, and a subscriber package 214. The policy component 210 sets forth access parameters and conditions that dictate which content can be accessed. The operational code 212 provides operational parameters for the conditional access system 102. The subscriber package 214 contains the information establishing which content the viewer can access and when. The subscriber package 214 may be configured with several different access levels, depending upon what the viewer has paid for, or is willing to pay for on-demand.

The software components 146 are stored in non-volatile memory and can be updated as a group or individually. New components can be downloaded and installed on the conditional access system 102 as part of a routine practice, or on an "as requested" basis. The new components can change, for example, the policy for accessing content; alter which content the viewer can access; modify the operation of the conditional access system 102; and so forth.

The embedded security module 140 performs the security functionality for the conditional access system 102. To prevent unauthorized access to content, the embedded security module 140 is constructed as a single integrated circuit chip separate from the CPU 144 and video processor 148. The module provides the cryptographic functionality used in deciphering the content. The cryptographic functionality, cipher primitives, and keys are maintained on the single piece of silicon, and not exposed to the other components, so that rogue operators are prevented from learning secrets by tapping chip-to-chip communication. The renewable software 146 utilizes the cryptographic functions of the security module 140, but does not ever directly access the keys or other decryption primitives.

In the illustrated implementation, the security module 140 contains the key store 142, a data content encryption/decryption engine 220, a key manager 222, and a private key 224. The data encryption/decryption engine 220 is used to decrypt the content to which the subscriber is deemed to have access based on the conditional access policy 210, subscriber package 214, and/or other software-based modules 146. In one implementation, the data encryption/decryption engine 220 implements a symmetric or "secret key'' cipher to perform bulk data encryption. Secret key ciphers employ a single secret key for both encryption and decryption. The secret key is known by both parties (e.g., content provider and conditional access system), but must otherwise be kept secret. If the secret key is exposed, then anyone can decrypt the content.

Two well-known secret key ciphers are DES (Data Encryption Standard) and AES (Advanced Encryption Standard). DES is a NIST-standard secret key cryptography cipher that has various strengths depending upon key length. Standard DES uses a 56-bit key, but triple DES increases security by extending the key to 112 or 168 bits. DES uses a block cipher method that breaks the text into 64-bit blocks before encrypting them. There are several DES encryption modes, with one popular mode using the logical "exclusive OR" function to XOR each plaintext block with the previous encrypted block. AES is another NIST-standard secret key cryptography method that uses 128-, 192- and 256-bit keys. AES uses the Rijndael algorithm (named for developers Vincent Rijmen and Joan Daemen) which allows encryption in one pass instead of the three used in triple DES, and is currently more secure due to its larger key size.

Secret key ciphers are fast and can be used to encrypt larges amounts of data very efficiently. Thus, the content sent to the conditional access system 102 is encrypted using a secret key cipher and a secret content key. There may be one secret content key for all content from a specific provider, or one secret content key associated with each program, or several secret content keys for a single piece of content. The secret content keys are stored in key store 142, as represented by keys 230(1), 230(2), ..., 230(K).

To keep the content keys secret, they are transferred to the conditional access system 102 in an encrypted state. More particularly, the secret content keys are themselves encrypted using an asymmetric or "public key" cipher. A public key cipher employs a pair of public and private keys to encrypt and decrypt information. The private key is kept secret, while the public key can be published or otherwise made available to the public. With public key algorithms, content encrypted with the public key can only be decrypted with the private key, and vice versa. One well-known public key cipher is the RSA algorithm, which is named for its creators Rivest, Shamir, and Adleman. Public key algorithms, such as RSA, are computation intensive; thus, they are not used for bulk encryption of the content. Rather, the public key ciphers are used to safely transfer the secret content keys.

The conditional access system 102 is assigned a private key 224 during manufacturing. It is embedded into the single-chip module 140 and never exposed outside of the chip. The corresponding public key is made available to the public. There may be one public/private key pair for each conditional access systems, or one key pair assigned to sets of multiple systems.

The content keys 230 are encrypted using the public key associated with the private key 224. The key manager 222 implements the public key cipher (e.g., RSA algorithm) and uses the private key 224 to decrypt the content keys 230. Once decrypted, the secret content keys are stored in key store 142. Key manager 222 is also responsible for managing the key store 142.

With the illustrated architecture, the conditional access system 102 is able to update software components 146 without impacting the security functionality. Also, the software components 146 can be renewed when desired, as the hardware security module 140 need not trust the software component because there are no exchanges of keys or other cipher primitives.

### Conditional Access Protocol

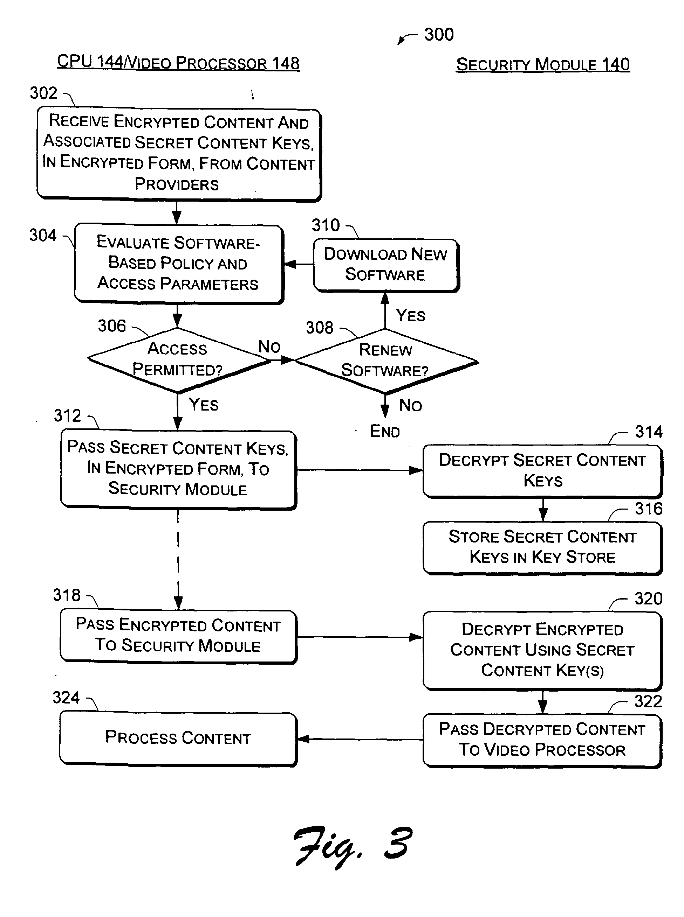

Fig. 3 shows a conditional access protocol 300 that is implemented by the conditional access system 102. The process 300 is performed by a hybrid of software and hardware components of system 102. The operations are visually aligned beneath headings to represent which components perform the operations.

At block 302, the conditional access system 102 receives content from various content providers. Some or all of the content arrives in an encrypted state to prevent unauthorized viewing. The content is encrypted at the content provider (e.g., digital broadcaster 110, cable headend 112) using a secret key cipher (e.g., DES or AES) and one or more secret content keys. The secret content keys are encrypted using a public key cipher and the public key corresponding to the private key 224of the conditional access system 102. The encrypted secret content keys are transferred to the conditional access system 102 together with, or separate from, the encrypted content.

At block 304, the CPU 144 determines whether the viewer is authorized to access the content based on the access conditions imposed by the policy component 210, subscriber package 214, or other parameters. Depending upon existing constraints, the viewer may or may not have authorization to access certain types of content. For instance, one subscriber may have permission to view programs from a subscription provider (e.g., HBO® or Showtime®), whereas another subscriber does not, and a third subscriber has temporary permission to watch a pay-per-view program. These various conditions are implemented in the software-based modules 146 executing at the CPU 144.

If access is not permitted (i.e., the "No" branch from block 306), the conditional access system determines whether the software components 146 should be renewed (block 308). Renewal evaluation may be an event proactively performed by the conditional access system (e.g., at routine times, or in response to a viewer's request for a special program), and/or a passive event in which the conditional access system passively waits for an indication that one or more modules should be updated. If renewal is warranted (i.e., the "Yes" branch from block 308), the new modules are downloaded or otherwise provided and installed on the conditional access system 102 (block 310). If no renewal is scheduled (i.e., the "No" branch from block 308), the process ends with no access being granted to the viewer.

If the viewer is authorized to access the content (i.e., the "Yes" branch from block 306), the CPU 144 passes one or more secret content keys associated with the particular content (or associated with the provider that provides the content) to the security module 140 (block 312). The secret content key(s) are passed to the security module in their encrypted state. At block 314, the key manager 222 decrypts the secret content key(s) using a public key cipher (e.g., RSA) and the system's private key 224. Once decrypted, the secret content key is stored in the key store 142 (block 316).

At block 318, the CPU 144 begins to pass the encrypted content to the security module 140. At block 320, the data content encryption/decryption engine 220 uses a secret key cipher (e.g., DES, AES) and the secret content key(s) 230 to decrypt the content. The data content encryption/decryption engine 220 passes the decrypted content from the security module 140 to the video processor 148 (block 322). At block 324, the video processor 148 processes the decrypted content for presentation to the viewer.

### Conclusion

Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1. A conditional access system comprising:
a processor;
one or more software components, executable on the processor, to administer conditional access policies for determining which content can be accessed;
a security module independent of the processor, the security module having cryptographic functionality and a key store; and
wherein the content deemed accessible by the software components is decrypted at the security module without exposing keys and cryptographic primitives used in the decryption.

2. A conditional access system as recited in claim 1, wherein the security module contains a private key from a public/private key pair, the security module using the private key to decrypt secret content keys for storage in the key store and subsequent use in decrypting the content.

3. A conditional access system as recited in claim 1, wherein the conditional access policies are renewed by replacing the one or more software components with one or more new software components.

4. A conditional access system as recited in claim 1, wherein the content comprises video content, and further comprising a video processor to process the content decrypted by the security module.

5. A conditional access system to receive content from a content provider, the content being encrypted using a secret key cipher and a secret content key, the secret content key being encrypted using a public key cipher and a public key of a private/public key pair, the conditional access system comprising:
a processor;
one or more software-based policy components, executable on the processor, that set forth conditional access policies for determining whether the content can be accessed; and
a security module independent of the processor and implemented as a single integrated circuit chip, the security module comprising:
a private key from the private/public key pair;
a key manager that implements the public key cipher and uses the private key to decrypt the secret content key for the content that is deemed accessible by the policy components;
a key store to store the secret content key; and
a content encryption/decryption engine that implements the secret key cipher and uses the secret content key to decrypt the content.

6. A conditional access system as recited in claim 5, wherein the secret key cipher is selected from a group of ciphers comprising a DES cipher and an AES cipher.

7. A conditional access system as recited in claim 5, wherein the public key cipher comprises an RSA cipher.

8. A conditional access system as recited in claim 5, further comprising a content processor to process the content decrypted by the data content encryption/decryption engine.

9. A conditional access system as recited in claim 5, wherein the conditional access policies are renewed by replacing the one or more software components with one or more new software components.

10. A method implemented at a conditional access system, comprising:
receiving content that is encrypted using a secret key cipher and a secret content key, the secret content key being encrypted using a public key cipher and a public key of a private/public key pair;
determining whether the content is accessible;
in an event the content is accessible, passing the secret content key in encrypted form to an embedded security module and decrypting the secret content key using the public key cipher and the private key of the private/public key pair;
passing the content to the embedded security module;
decrypting the content using the secret key cipher and the secret content key;
transferring the decrypted content from the embedded security module to a processor for further processing.

11. A method as recited in claim 10, wherein the determining comprises evaluating conditional access policies implemented in software separate from the embedded security module.

12. A method as recited in claim 11, further comprising renewing the conditional access policies by replacing the software with new software.
